# EUROPÄISCHE PATENTANMELDUNG

(11) **EP 1 124 365 A1**
(43) Veröffentlichungstag der Anmeldung: **16.08.2001**
(21) Anmeldenummer: 00102737.4
(22) Anmeldetag: 10.02.2000
(51) Int. Cl.: H04M 3/487, H04Q 3/72, H04Q 11/04

(54) **Verfahren zur Abgabe von Signalisierungsinformationen in einem Telekommunikationssystem sowie Vermittlungszentrale**

(71) Anmelder: Ascom AG, 3000 Bern 14 (CH)
(72) Erfinder: Thüring, Willi, 4535 Hubersdorf SO (CH)
(74) Vertreter: Patentanwälte Schaad, Balass, Menzl & Partner AG

(57) **Zusammenfassung**

Das Verfahren dient Abgabe von Signalisierungsinformationen in einem Telekommunikationssystem, bei dem während dem Verbindungsaufbau zwischen einem rufenden zu einem gerufenen Teilnehmer mittels einer mit dem Endgerät (1a; 1b) des gerufenen Teilnehmers verbundenen, mit einer Steuereinheit (101) versehenen Vermittlungszentrale (100), einer Nebenstellenanlage oder einer Teilnehmervermittlungsstelle, die zu erstellende Verbindung betreffende Daten aus einem Speicher (108) abgerufen, in Form von Sprachsignalen zum Endgerät (1a; 1b) des gerufenen Teilnehmers übertragen und dort noch vor Übernahme der Verbindung abgegeben werden, wobei die Steuereinheit (101) feststellt, ob das Endgerät (1a; 1b) des gerufenen Teilnehmers zur Abgabe in Form von Sprachsignalen vorliegenden Signalisierungsinformationen vorbereitet ist, abgerufene Daten in einem zentral angeordneten Sprachgenerator (115) in Sprachsignale konvertieren lässt und/oder zu den abgefragten Daten korrespondierende Sprachsignale aus dem Speicher (108) ausliest, die vom Sprachgenerator (115) und/oder vom Speicher (108) abgegebenen Sprachsignale in einen mit dem Endgerät (1a; 1b) des gerufenen Teilnehmers verbundenen Sprachkanal einfügt und das Endgerät (1a; 1b; 1c) des gerufenen Teilnehmers zur Abgabe des Sprachsignals über einen eingebauten oder einen externen Lautsprecher veranlasst.

## Beschreibung

Die Erfindung betrifft ein Verfahren zur Abgabe von Signalisierungsinformationen in einem Telekommunikationssystem sowie eine Vermittlungszentrale nach dem Oberbegriff des Patentanspruchs 1 bzw. 9.

Verfahren zur Signalisierung in Telekommunikationssystemen mit leitungsvermittelten Verbindungen sind aus [1], Peter Bocker, ISDN-Digitale Netze für Sprach-, Text, Daten-, Video- und Multimediakommunikation, Springer Verlag, Berlin 1997, Kapitel 4.4.5, Seiten 126-131 bekannt. Während dem Verbindungsaufbau werden nach Übertragung einer SETUP-Information (siehe [1], Bild 4.27) auf dem Endgerät des gerufenen Teilnehmers Rufsignale abgegeben, wonach dieser die Verbindung übernehmen kann.

Sofern mehrere Endgeräte in einem Raum vorgesehen sind, können Klingeltöne, auch wenn unterschiedliche Lautstärken und Rufsequenzen eingestellt sind, nur schwerlich einem Endgerät bzw. einem Teilnehmer korrekt zugeordnet werden.

Die Angabe des rufenden Teilnehmers erfolgt bei modernen Telekommunikationsendgeräten normalerweise über die Anzeige. Sofern sich der gerufene Teilnehmer jedoch nicht im Bereich seines Endgerätes aufhält, ist ihm diese Information nicht zugänglich.

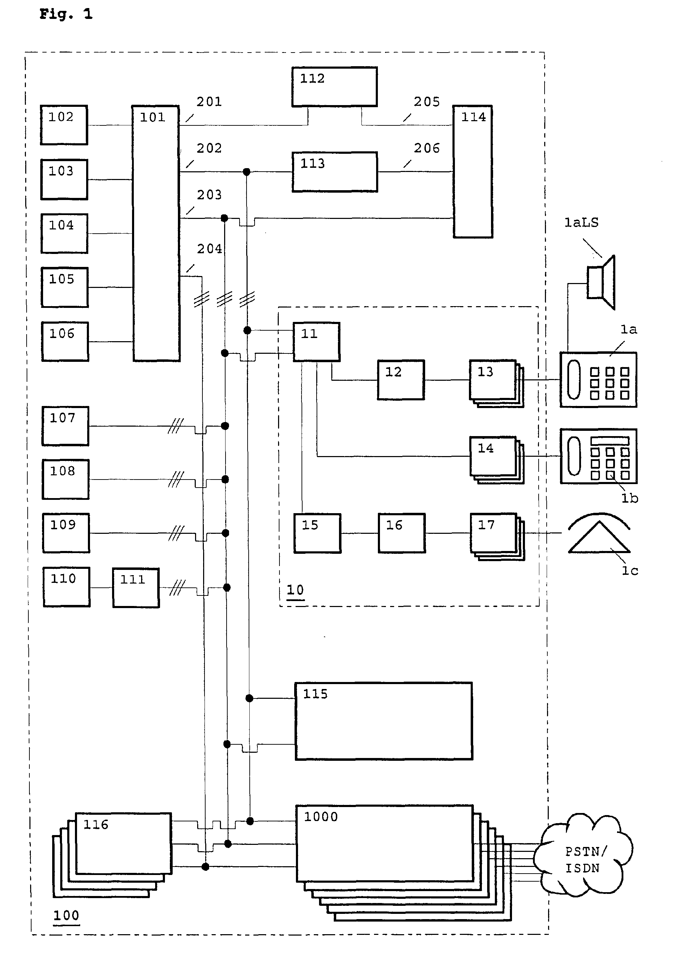

Aus [2], U.S. Patent No. 4,899,358 ist ein mittels einer Teilnehmervermittlungsstelle realisiertes Anrufinformationssystem bekannt, durch das der Name eines rufenden Teilnehmers aus einer Datenbank ausgelesen und nach Umwandlung von Text in Sprache auf dem Endgerät des gerufenen Teilnehmers akustisch ausgegeben wird. Dazu sind in den innerhalb der Benutzer-Peripherie der Vermittlungszentrale vorgesehenen Teilnehmeranschlussmodulen je mehrere Sprachgeneratoren vorgesehen (siehe [2], Fig. 1), durch die Text in Sprache umgewandelt und über analoge oder digitale Linienmodule an die Endgeräte abgegeben wird.

Durch die dezentrale Anordnung der Sprachgeneratoren in der Vermittlungszentrale ergibt sich jedoch nicht nur ein sehr aufwendiger Aufbau mit aufwendigen Teilnehmeranschlussmodulen, sondern auch ein aufwendiger Verfahrensablauf und eine erhöhte Belastung der Bussysteme, da die von den dezentral angeordneten Sprachgeneratoren benötigten, rufende Teilnehmer betreffende Daten von einer ausserhalb der Vermittlungszentrale angeordneten Datenbank abgerufen, verteilt und anschliessend konvertiert werden müssen.

Der vorliegenden Erfindung liegt daher die Aufgabe zugrunde, ein einfach realisierbares Verfahren anzugeben, mittels dem Signalisierungsinformationen in gesprochener Form an Endgeräten eines Telekommunikationssystems ausgegeben werden können. Ferner ist eine zur Anwendung des Verfahrens geeignete Vermittlungszentrale anzugeben.

Die Lösung dieser Aufgabe gelingt mit den in Anspruch 1 bzw. 9 angegebenen Merkmalen.

Das erfindungsgemässe Verfahren, welches die Abgabe von Signalisierungsinformationen in gesprochener Form an einem Endgerät eines gerufenen Teilnehmers erlaubt, ist mit einfachen Massnahmen und Mitteln durchführbar. Die Signalisierungsinformationen umfassen wahlweise den Namen des rufenden Teilnehmers, des gerufenen Teilnehmers und/oder weitere, insbesondere die zu erstellende Verbindung betreffende Informationen.

Besonders vorteilhaft beim erfindungsgemässen Verfahren ist, dass Signalisierungsinformationen in der Vermittlungszentrale mittels einem einzigen Sprachgenerator, vorzugsweise einem digitalen Signalprozessor (DSP), zentral erzeugt und über ISDN B-Kanäle bzw. Sprachkanäle sowie die Benutzer-Peripherie der Vermittlungszentrale den Endgeräten der gerufenen Teilnehmer zugeführt werden können. Dadurch ergibt sich eine Vereinfachung des Aufbaus der Benutzer-Peripherie der Vermittlungszentrale, die mit konventionellen Teilnehmeranschlussmodulen bestückt werden kann. Die in Sprachsignale umzuwandelnden Daten können zentral von einer Datenbank oder Speichermodulen abgerufen und dem Sprachgenerator zugeführt werden, wodurch diesbezüglich eine einfache Kommunikationsstruktur über zentrale Bussysteme realisiert werden kann.

Zur Ausgabe der gesprochenen Signalisierungsinformationen werden die betreffenden ISDN B-Kanäle bzw. Sprachkanäle, bevor die Verbindung durch den gerufenen Teilnehmer übernommen wird, über Digital-/Analog Wandler und Verstärker mit dem Lautsprecher der Endgeräte verbunden. Diese Signalisierungsfunktionen werden durchgeführt, indem entsprechende Steuersignale über einen vom Sprachkanal getrennten Hilfskanal (ISDN D-Kanal) zu den Endgeräten übertragen werden. Die Erfindung kann daher mittels einfachen Massnahmen in der Vermittlungszentrale und in den Endgeräten realisiert werden. Zudem sind verschiedenartige Vermittlungszentralen und Endgeräte erfindungsgemäss einsetzbar, sofern die genannten Leistungsmerkmale vorgesehen sind. Die Erfindung kann zudem in Vermittlungszentralen angewendet werden, die sich im Teilnehmerbereich (Nebenstellenanlagen) oder im öffentlichen Bereich bzw. im Bereich eines Netzbetreibers (Teilnehmervermittlungsstellen) befinden (siehe [1], Seite 180, Bild 5.11 oder [1], Seite 196, Bild 6.2).

Die Erfindung wird nachstehend anhand von Zeichnungen näher erläutert. Dabei zeigt:
- Fig. 1: den Aufbau einer zur Anwendung des erfindungsgemässen Verfahrens geeigneten Vermittlungszentrale,
- Fig. 2a: dynamische Elemente von akustisch an einem Endgerät abgegebenen Signalisierungsinformationen,
- Fig. 2b: statische Elemente von akustisch an einem Endgerät abgegebenen Signalisierungsinformationen und
- Fig. 3a,b: den sequentiellen Ablauf der erfindungsgemässen Signalisierung nach Erhalt eines Anrufs.

Fig. 1 zeigt den detaillierten Aufbau einer zur Anwendung des erfindungsgemässen Verfahrens geeigneten Vermittlungszentrale 100, die über eine Benutzer-Peripherie bzw. Teilnehmeranschlussmodule 10 mit Endgeräten 1a, 1b, 1c, und über eine Netz-Peripherie bzw. Leitungsanschlussmodule 1000 mit dem öffentlichen Netz PSTN, beispielsweise dem ISDN (Integrated Services Digital Network) verbunden ist. Die prinzipielle Struktur sowie die Benutzer- und Netzanschlussstrukturen einer als ISDN-Nebenstellenanlage ausgestalteten Vermittlungszentrale sind in [1], Seiten 181-186 beschrieben und gezeigt (siehe Bild 5.12, Bild 5.13a und 5.13b). Die Struktur einer Teilnehmerstelle eines Netzbetreibers sowie der Anschluss von Endgeräten ist in [1], Seiten 147-151 beschrieben und gezeigt (siehe Bild 4.31). Aus [1], Bild 4.31 und Bild 5.12 ist ersichtlich, dass Signalisierungsfunktionen durch eine zentrale Steuereinheit erfüllt werden, die mit einem zur Durchschaltung von Verbindungen zwischen rufenden und gerufenen Teilnehmern dienenden Koppelfeld verbunden ist. Der Austausch von Signalisierungsinformationen mit der zentralen Steuereinheit erfolgt normalerweise über eigene Steuerwege, um das Koppelfeld zu entlasten. Die Steuereinheit hat zudem Zugriff zu Speichermedien.

Die in Fig. 1 gezeigte Vermittlungszentrale 100, die erfindungsgemäss eine zentral, das heisst zwischen der Benutzer-Peripherie 10 und der Netz-Peripherie 1000, angeordnete, mit einem Sprachgenerator 115 verbundene Steuereinheit 101 aufweist, wird nachstehend anhand von Fig. 1 beschrieben.

Die Steuereinheit 101, die über eine Leitung 201 mit einem Oszillator 112 verbunden ist, steuert über Steuerleitungen und Bussysteme 202, 203 und 204 das Koppelfeld, die Teilnehmeranschlussmodule 10, die Leitungsanschlussmodule 1000, den Sprachgenerator 115 und weitere Elemente der Vermittlungszentrale 100. An der Steuereinheit 101 ist ein für die Überwachung der Speisung vorgesehenes Modul 102 angeschlossen, durch das der Status der Betriebsspannungen überwacht und gemeldet wird. Unmittelbar an die Steuereinheit 101 angeschlossen sind in dieser vorzugsweisen Ausgestaltung ferner eine Karte 103 zur Erkennung der Nutzungsberechtigung, Relais 104 für Spezialanschlüsse, Ethernet und V-24 Schnittstellenkarten 105, 106 für Wartung und Unterhalt der Vermittlungszentrale 100.

Der Oszillator 112 ist über die Leitung 205 mit einem Referenztaktgenerator 114 verbunden, von dem über die Leitung 206 Referenztakte an eine programmierbare Logikeinheit 113 abgegeben werden, welche Takte für das verwendete digitale Zeitmultiplexverfahren (siehe [1], Seite 203, Bild 6.4) generiert.

Über den Adress- und Datenbus 203 ist die Steuereinheit 101 mit einem Programm- und einem Arbeitsspeicher 107; 108 sowie mit einem zur Abgabe von Zeit und Datum vorgesehenen Real Time Clock-Modul 109 und über eine Schnittstelleneinheit 111 mit einer Anzeige 110 verbunden, auf der der gewählte Betriebsmodus und der Betriebsstatus angezeigt werden.

Vorgesehen sind ferner Erweiterungssteckplätze für weitere Module 116, anhand denen die Leistungsmerkmale der Vermittlungszentrale 100 erweitert werden können (Voice Mail, etc.).

Das Teilnehmeranschlussmodul 10, von dem meist mehrere vorgesehen sind, dient dazu, die meist verschiedenartigen Endgeräte 1a, 1b, 1c der Teilnehmer über Zweidraht- oder ISDN-Schnittstellen an die Vermittlungszentrale 100 anzuschliessen (siehe auch [1], Seite 182, Bild 5.12). Die proprietären oder standardisierten (z.B. ISDN) Endgeräte 1a, 1b, 1c besitzen oft nur eine beschränkte Funktionalität. Durch Tastendruck werden Kommandos übertragen, die von der Vermittlungszentrale 100 ausgewertet und ausgeführt werden.

Das Teilnehmeranschlussmodul 10 weist eine dezentrale Koppelung 11 auf, welche über einen als Datenpuffer dienenden Logikbaustein 15, einen Analog/Digital Converter 16 und ein Schnittstellenmodul 17 mit einem analogen Endgerät, und über Schnittstellenbausteine 12, 13, 14 mit digitalen Endgeräten 1a, 1b verbunden ist. Zur akustischen Abgabe der in Sprachform vorliegenden Signalisierungsinformationen ist das Endgerät la mit einem externen Lautsprecher 1aLS verbunden.

Erfindungsgemäss werden während dem Verbindungsaufbau zwischen einem rufenden zu einem gerufenen Teilnehmer mittels der Steuereinheit 101 anstelle konventioneller Signalisierungssignale in Form von Sprachsignalen vorliegende Signalisierungsinformationen zu den Endgeräten 1a, 1b der gerufenen Teilnehmer übertragen und von diesen entsprechend steuerbaren Endgeräten 1a, 1b abgegeben. Das Endgerät 1c wird hingegen nur für konventionelle Telefonfunktionen (POTS) verwendet. Die Sprachsignale werden zentral durch einen Sprachgenerator 115, vorzugsweise einen digitalen Signalprozessor (DSP) erzeugt.

Im Gegensatz zu den "normalen" Mikroprozessoren sind Signalprozessoren für bestimmte Aufgaben speziell konzipierte Bausteine. Ursprünglich konzipiert für Anwendungen der reinen Signalverarbeitung, also steilflankige Filter, Korrelationsanalysatoren, Spektralanalyse etc., werden die unterschiedlichsten Modelle in der Bildverarbeitung, im Mobilfunkbereich, in der Kryptographie und im Personalcomputer-Bereich (dort als Co-Prozessoren) eingesetzt. Die Grenzen zwischen Signalprozessoren und Mikrocontroller verschwinden zunehmend. Wegen der besonderen Architektur ist ein Signalprozessor, wie beispielsweise der TMS320C2x von Texas Instruments, der ADSP-2100 von Analog Devices oder der PCB 501x von Philips (siehe [3], Roland Best, Digitale Signalverarbeitung und -simulation, AT Verlag, Aarau 1993, 2. Auflage, Seite 221), in bestimmten Fällen einem modernen Prozessor eines Personalcomputers weit überlegen.

Der Sprachgenerator 115 erzeugt bei der vorliegenden Anwendung, nebst den Sprachsignalen für die akustisch abzugebenden Signalisierungsinformationen vorzugsweise auch die zentralen Töne, wie Summton, Besetztton, etc.. Ferner generiert und detektiert er DTMF-Töne (Dial Tone Multiple Frequency). Vorzugsweise mischt er auch Sprachkanäle für Konferenzgespräche. Der Sprachgenerator 115 kann daher durch die Erweiterung der Funktionalität eines in einer Vermittlungsstelle meist ohnehin vorhandenen Signalprozessors in einfacher Weise geschaffen werden.

Durch die Steuereinheit 101 werden mittels den während dem Verbindungsaufbau übertragenen Daten, wie den Rufnummern des rufenden und des gerufenen Teilnehmers, die zu erstellende Verbindung betreffende Informationen (z.B. die Namen des rufenden und des gerufenen Teilnehmers), z.B. aus dem Speicher 108 abgerufen und dem Sprachgenerator 115 zugeführt und von diesem in Sprachsignale konvertiert. Die derart erzeugten Sprachsignale werden als Nutzinformation in einen für den gerufenen Teilnehmer vorgesehenen Sprachkanal, z.B. den ISDN B-Kanal, eingefügt. Dies geschieht durch das Koppelfeld, die Steuereinheit 101 oder Bauteile in den Teilnehmeranschlussmodulen 10, die die z.B. PCM-codierten Sprachsignale in die Zeitschlitze der entsprechenden, nach dem Zeitmultiplexverfahren organisierten Sprachkanäle einfügen (siehe z.B. [1], Seiten 203 und 204, Bilder 6.4 und 6.5).

Die Signalisierungsinformationen können grundsätzlich auch über den Signalisierungskanal bzw. den ISDN D-Kanal zu den Teilnehmeranschlussmodulen 10, gegebenenfalls auch zu den Endgeräten 1a, 1b übertragen werden. Die Bandbreite des Signalisierungskanals genügt grundsätzlich für die Übertragung geringer Datenmengen. Die abzugebenden Signalisierungsinformationen können ferner in den Endgeräten 1a, 1b zwischengespeichert werden.

Sofern die Signalisierungsinformationen über den Sprachbzw. B-Kanal übertragen werden, teilt die Steuereinheit 101 dem Endgerät 1a, 1b über Steuerleitungen (siehe [1], Seite 182, Bild 5.12, Leitungen 4) mit, dass der Sprachkanal, ohne die Verbindung zu übernehmen, mit dem internen oder externen Lautsprecher laLS des entsprechenden Endgerätes la zu verbinden ist. Nach Abhören der akustisch abgegebenen Signaliserungsinformationen kann der gerufene Teilnehmer auf den Anruf eintreten. Vorzugsweise werden sprachgesteuerte Endgeräte 1a, 1b verwendet, so dass ein Teilnehmer, der sich nicht am Arbeitsplatz befindet, durch Abgabe von Sprachkommandos die Verbindung übernehmen oder ablehnen kann.

Möglich ist ferner die Ablage von bereits konvertierten Sprachsignalen im Speicher 108, die durch die Steuereinheit 101 direkt abrufbar sind. Sofern genügend Speicherkapazität vorhanden ist, kann auf diese Art der Sprachgenerator 115 entlastet werden.

Die Signalisierungsinformationen betreffen vorzugsweise Daten der zu erstellenden Verbindung. Möglich ist ferner die Nutzung weiterer Informationen. Beispielsweise kann sich der Teilnehmer auch die vom Real Time Clock abgegebene Zeitinformation ansagen lassen. Möglich ist daher die Ansage dynamisch ändernder und statischer Informationselemente, die bedarfsweise verknüpft werden. Die Zeitansage ist z.B. folgendermassen zusammengesetzt "Es ist [statisches Element]" - "Stundenzahl [dynamisches Element]" - "Uhr [statisches Element]" - - "Minutenzahl [dynamisches Element]".

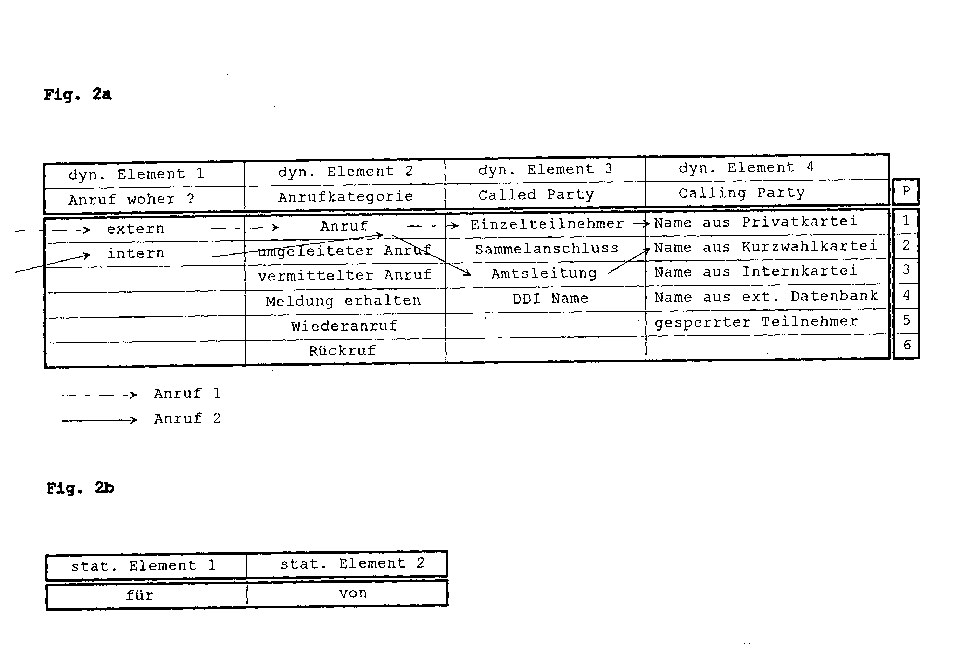

Fig. 2 zeigt, wie verbindungsrelevante Ansagen mittels dynamischen und statischen Elementen zusammengestellt werden. In Fig. 2a sind dynamisch ändernde und in Fig. 2b sind statische Elemente in Tabellen eingetragen. In der Tabelle von Fig. 2a sind in Spalte 1 mögliche Angaben zur Herkunft des Anrufs, in Spalte 2 mögliche Angaben zu Art des Anrufs und der teilweise erstellten Verbindung, in Spalte 3 mögliche Angaben zum gerufenen Teilnehmer oder der Art des Anschlusses des gerufenen Teilnehmers und in Spalte 4 mögliche Angaben zum gerufenen Teilnehmer enthalten, die aus einer von vorzugsweise mehreren Karteien bzw. Datenbanken entsprechend einer gegebenenfalls vom Teilnehmer festgelegten Rangfolge abgerufen werden können.

Der Ausdruck "Anruf" in Spalte 2 steht für einen gewöhnlichen Erstanruf. "umgeleiteter Anruf" wird verwendet, wenn der Anruf bei einem anderen Teilnehmer eingetroffen ist und von diesem umgeleitet wurde. "vermittelter Anruf" wird angesagt, wenn die Telefonistin den Anruf übernommen und zum gewünschten Teilnehmer weitervermittelt hat. "Meldung erhalten" wird angesagt, wenn der Teilnehmer eine Textmeldung erhalten hat (Anwendungsbeispiel: gesprochener Telefax). Wiederanruf oder Rückruf sind weitere nützliche Spezialansagen.

Spalte 3 enthält die Auswahl der Anruf-Adressaten (called parties). Ein Sammelanschluss ist eine Konfiguration einer Nebenstellenanlage, bei welcher mehrere Teilnehmer unter einer Nummer erreichbar sind. Der Name des Sammelanschlusses kennzeichnet die normalerweise zu einer Arbeitsgruppe zusammengeschlossenen Teilnehmer. "Amtsleitung" bezeichnet die Teilnehmergruppe, die diesem Anschluss zugewiesen ist. "DDI Name" ist der einer Direktwahlnummer zugeordnete Name. Ein Teilnehmer kann ferner in einer von mehreren Identitäten gerufen werden. Zum Beispiel mit seinem persönlichen Namen oder seiner Funktionsbezeichnung. Die Bezeichnung mit der höchsten Priorität wird angesagt.

Die Elemente in Spalte 4 zeigen, von wem der Anruf ausgelöst wurde (calling party). Wird die vom Telekommunikationsnetz (ISDN) gelieferte Nummer in der mit der höchsten Priorität eingestuften, vom Teilnehmer bearbeiteten Privatkartei gefunden, wird der dort gespeicherte Name angesagt. Die Nummer kann in absteigender Rangfolge in einer z.B. von der Telefonistin bearbeiteten Kurzwahlkartei, in einer Internkartei mit allen an die Nebenstellenanlage angeschlossenen Teilnehmern oder in einer externen Datenbank gesucht werden. Bei unterdrückter Rufnummer des rufenden Teilnehmers (calling line identification restriction) erfolgt die Ansage "gesperrter Teilnehmer".

Die beschriebenen dynamischen Elemente von Fig. 2a werden durch den Sprachgenerator 115 mit den in Fig. 2b auszugsweise gezeigten statischen Elemente verknüpft. Die statischen Elemente sind vorzugsweise im Sprachgenerator 115 oder im Speicher 108 abgelegt. Möglich ist die Bildung der gesamten Ansage mit nachfolgender Konversion in Sprachsignale oder der Abruf bereits konvertierter statischer Elemente.

Die Rangfolge der Elemente sowie die Lautstärke der Ansage sind vorzugsweise durch die Teilnehmer programmierbar. Der Teilnehmer kann z.B. auch festlegen, dass er nur Rückrufe empfängt.

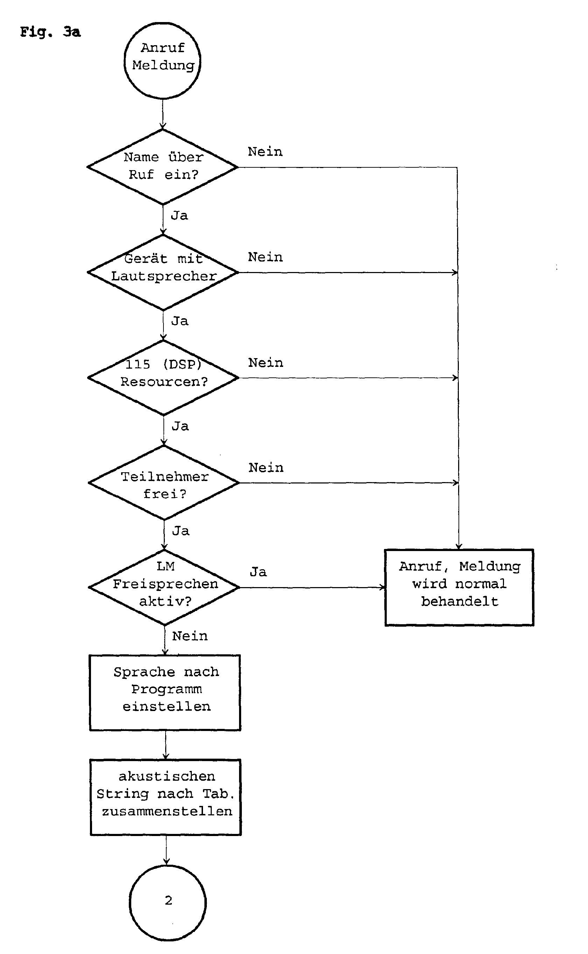

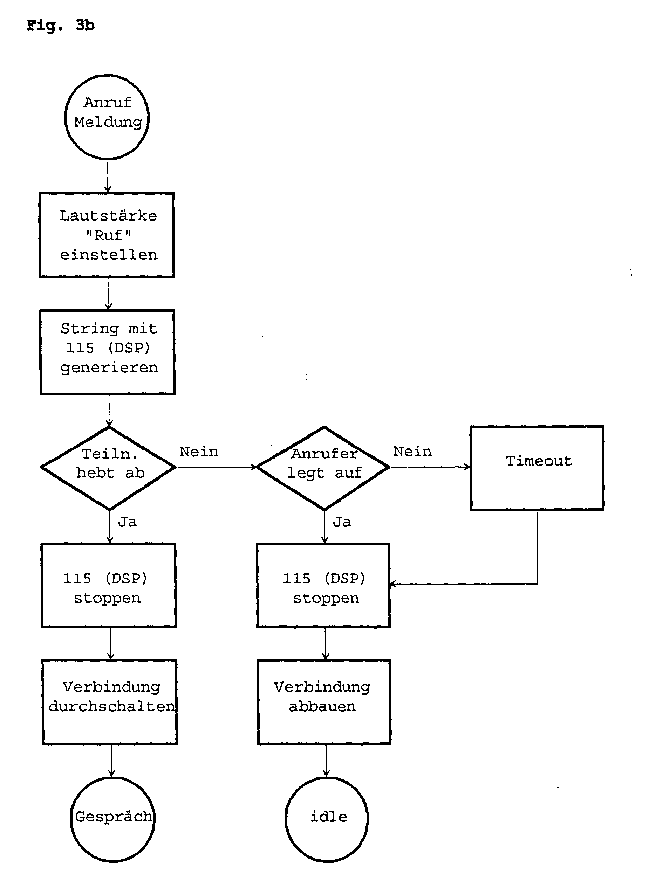

Fig. 3a und Fig. 3b zeigen einen vorzugsweisen Ablauf des erfindungsgemässen Verfahrens bei Eintreffen eines Anrufs. Zuerst prüft die Steuereinheit 101, ob das erfindungsgemässe Leistungsmerkmal "Name über Ruf" beim Endgerät 1a, 1b des gerufenen Teilnehmers eingeschaltet ist. Ist dies nicht der Fall ist, wird der Anruf in herkömmlicher Art und Weise behandelt.

Als nächstes wird geprüft, ob das Endgerät 1a, 1b des gerufenen Teilnehmers einen Lautsprecher besitzt. Ist das Endgerät 1a, 1b nicht für Ansage ausgerüstet, wird ein herkömmlicher Anruf generiert.

Danach wird kontrolliert, ob für die Aufbereitung der Rufansage genügend Ressourcen seitens des Sprachgenerators 115, im vorliegenden Fall eines Signalprozessors (DSP), zur Verfügung stehen. Ist der Sprachgenerator 115 durch andere Aktivitäten (Ton-, DTMF-, Konferenzfunktionen, usw.) ausgelastet, wird die Rufansage nicht aktiviert.

Nun wird abgefragt, ob der gerufene Teilnehmer frei ist. Dies ist erforderlich, um einen freien Sprach- bzw. ISDN-B-Kanal benutzen zu können. Ist der Teilnehmer besetzt, so wird der Anruf ebenfalls auf herkömmliche Weise offeriert.

Anschliessend wird geprüft, ob der gerufene Teilnehmer das automatische Freisprechen aktiviert hat. Ist dies der Fall, so ist es nicht möglich, eine Rufansage zu generieren, da das Endgerät 1a, 1b sofort in den Freisprech-Modus schalten würde. Der Anruf wird als normaler Ruf weiter behandelt.

Nach diesen Tests wird die eingestellte Sprache des Telefons abgefragt. Dies, damit die statischen Text-Elemente gemäss Fig. 2b in der richtigen Sprache abgefragt und abgespielt werden können.

In Abhängigkeit der vorliegenden Daten und Instruktionen werden von der Steuereinheit 101 die statischen und dynamischen Elemente zu einer Ansage zusammengestellt und in den Sprachgenerator 115 geladen.

Anschliessend wird das Endgerät 1a, 1b des gerufenen Teilnehmers auf die vorprogrammierte Lautstärke des Rufes eingestellt.

Dann beginnt der Sprachgenerator 115, auf entsprechenden Befehl der Steuereinheit 101, die aus der Konversion resultierenden Sprachsignale in die Zeitschlitze des betreffenden Sprachkanals einzuspielen. Über den Signalisierungs- bzw. ISDN D-Kanal wird das Endgerät 1a, 1b des gerufenen Teilnehmers ferner derart eingestellt, dass die über den Sprachkanal übertragenen Signalisierungsinformationen auf dem Lautsprecher ausgeben werden. Die resultierende Ansage ertönt im allgemeinen als sich wiederholende Folge.

Übernimmt der gerufene Teilnehmer die Verbindung z.B. durch Abheben des Hörers, wird dies detektiert und der Steuereinheit 101 gemeldet, welche die Generierung der akustischen Information stoppt. Gesteuert durch die Zeitschlitzvermittlung, werden die Kanäle des rufenden und des gerufenen Teilnehmers durch das von der Steuereinheit 101 gesteuerte Koppelfeld anschliessend miteinander verbunden, wonach die Verbindung erstellt ist (siehe [1], Seite 127, Bild 4.27).

Nimmt der Zielteilnehmer den Anruf nicht entgegen oder der Anrufer legt vorher auf, wird der Sprachgenerator 115 gestoppt und die Verbindung abgebaut. Das gleiche geschieht, wenn der Anruf durch Time-out vom System beendet wird. Danach geht die Vermittlungszentrale 100 wieder in den Ausgangszustand.
[1] Peter Bocker, ISDN-Digitale Netze für Sprach-, Text, Daten-, Video- und Multimediakommunikation, Springer Verlag, Berlin 1997
[2] U.S. Patent No. 4,899,358 (Blakley)
[3] Roland Best, Digitale Signalverarbeitung und - simulation, AT Verlag, Aarau 1993

## Patentansprüche

1. Verfahren zur Abgabe von Signalisierungsinformationen in einem Telekommunikationssystem, bei dem während dem Verbindungsaufbau zwischen einem rufenden und einem gerufenen Teilnehmer mittels einer mit dem Endgerät (1a; 1b) des gerufenen Teilnehmers verbundenen, mit einer Steuereinheit (101) versehenen Vermittlungszentrale (100), einer Nebenstellenanlage oder einer Teilnehmervermittlungsstelle, die zu erstellende Verbindung betreffende Daten aus einem Speicher (108) abgerufen, in Form von Sprachsignalen zum Endgerät (1a; 1b) des gerufenen Teilnehmers übertragen und dort noch vor Übernahme der Verbindung abgegeben werden, **dadurch gekennzeichnet,** dass die Steuereinheit (101)
a) feststellt, ob das Endgerät (1a; 1b) des gerufenen Teilnehmers zur Abgabe in Form von Sprachsignalen vorliegenden Signalisierungsinformationen ausgerüstet ist,
b) die die zu erstellende Verbindung betreffenden Daten von der Speichereinheit (108) abruft,
c) die abgerufenen Daten in einem Sprachgenerator (115), insbesondere einem Signalprozessor, in Sprachsignale konvertieren lässt und/oder zu den abgefragten Daten korrespondierende Sprachsignale aus dem Speicher (108) ausliest,
d) die vom Sprachgenerator (115) und/oder vom Speicher (108) abgegebenen Sprachsignale in einen mit dem Endgerät (1a; 1b) des gerufenen Teilnehmers verbundenen Sprach- oder Signalisierungskanal einfügt und
e) das Endgerät (1a; 1b) des gerufenen Teilnehmers zur Abgabe des Sprachsignals über einen eingebauten oder einen externen Lautsprecher veranlasst.

2. Verfahren nach Anspruch 1, **dadurch gekennzeichnet,** dass die Sprache der Signalisierungsinformationen in Abhängigkeit eines Eintrags im Speicher (108), der Nummer des gerufenen Teilnehmers, der Nummer des rufenden Teilnehmers und/oder entsprechend den Endgeräteeinstellungen des gerufenen Teilnehmers gewählt wird.

3. Verfahren nach Anspruch 1 oder 2, **dadurch gekennzeichnet,** dass Signalisierungsinformationen dynamisch ändernde Elemente
a) Herkunft des Anrufs, wie "intern" oder "extern",
b) Anrufkategorie, wie "Anruf", "Rückruf", "Meldung erhalten", "umgeleiteter Anruf" oder "vermittelter Anruf",
c) Name des gerufenen Teilnehmers, gegebenenfalls eines Einzelteilnehmers, Sammelanschlusses, Amtsanschlusses oder einer Kurzwahl, und/oder
d) Name des rufenden Teilnehmers enthalten.

4. Verfahren nach Anspruch 1, 2 oder 3, **dadurch gekennzeichnet,** dass Signalisierungsinformationen statische Elemente, wie "für" oder "von", enthalten.

5. Verfahren nach Anspruch 3 oder 4, **dadurch gekennzeichnet,** dass statische Elemente konvertiert als Sprachsignale oder unkonvertiert aus dem Speicher (108) oder einem im Sprachgenerator (115) vorgesehenen Speicher abgerufen werden.

6. Verfahren nach Anspruch 3, 4 oder 5, **dadurch gekennzeichnet,** dass die dynamischen und statischen Elemente durch weitere gegebenenfalls nicht sprachliche Signalisierungsinformationen, wie Ruftöne oder Klingeln, ergänzt werden und/oder dass der als Signalprozessor ausgestaltete Sprachgenerator (115) zur Erzeugung von zentralen Tönen, wie Summton, Besetztton, verwendet wird.

7. Verfahren nach Anspruch 3, 4, 5 oder 6, **dadurch gekennzeichnet,** dass die Auswahl dynamischer und statischer Elemente gemäss einer gegebenenfalls vom gerufenen Teilnehmer festgelegten Rangfolge durchgeführt wird.

8. Verfahren nach einem der Ansprüche 1-7, **dadurch gekennzeichnet,** dass der Anruf durch den gerufenen Teilnehmer mittels Sprachsteuerung seines Endgerätes (1a; 1b) behandelt wird.

9. Vermittlungszentrale (100) für ein Telekommunikationssystem, insbesondere Nebenstellenanlage oder Teilnehmervermittlungsstelle, mit Leitungsanschlussmodulen (1000), die mittels einem von einer Steuereinheit (101) gesteuerten Koppelfeld über Teilnehmeranschlussmodule (10) mit Endgeräten (1a, 1b) verbindbar sind und mit einem Speicher (108), aus dem die zu erstellende Verbindung betreffende Daten abrufbar, in Form von Sprachsignalen zum Endgerät (1a; 1b) des gerufenen Teilnehmers übertragbar und dort noch vor Übernahme der Verbindung abgebbar sind, **dadurch gekennzeichnet,** dass ein zentral genutzter Sprachgenerator (115) vorgesehen ist, dem mittels der Steuereinheit (101) von der Speichereinheit (108) abgerufene Daten zuführbar sind, die von diesem in Sprachsignale konvertierbar und in einen mit dem Endgerät (1a; 1b) eines gerufenen Teilnehmers verbundenen Sprach- oder Signalisierungskanal einfügbar oder in den Speicher (108), für den späteren direkten Abruf mittels der Steuereinheit (101), ablegbar sind.

10. Vermittlungszentrale nach Anspruch 9, **dadurch gekennzeichnet,** dass die Steuereinheit (101) derart zur Signalisierung der Endgeräte (1a; 1b) gerufener Teilnehmer geeignet ist, dass diese, noch vor Übernahme der Verbindung durch den gerufenen Teilnehmer, zur Abgabe des Sprachsignals über einen eingebauten oder einen externen Lautsprecher veranlasst werden können.

11. Vermittlungszentrale nach Anspruch 9 oder 10, **dadurch gekennzeichnet,** dass die Steuereinheit (101) zur Bildung von Signalisierungsinformationen geeignet ist, die aus statischen und/oder dynamischen Elementen bestehen, die vom Speicher (108) abgerufen oder vom Sprachgenerator (115) abgerufen werden.

12. Vermittlungszentrale nach Anspruch 9, 10 oder 11,
**dadurch gekennzeichnet,** dass im Speicher (108) Instruktionen des gerufenen Teilnehmers ablegbar sind, anhand denen die Steuereinheit (101) die Signalisierungsinformationen zusammenstellt.

13. Vermittlungszentrale nach Anspruch 9, 10, 11 oder 12, **dadurch gekennzeichnet,** dass der Sprachgenerator (115) ein Signalprozessor ist, der vorzugsweise gleichzeitig zur Erzeugung von zentralen Tönen, wie Summton, Besetztton, in der Vermittlungszentrale dient.
